# EUROPÄISCHE PATENTSCHRIFT

(11) **EP 2 788 550 B1**
(45) Veröffentlichungstag und Bekanntmachung des Hinweises auf die Patenterteilung: **13.09.2017**
(21) Anmeldenummer: 12801713.4
(22) Anmeldetag: 20.11.2012
(51) Int. Cl.: F03B 3/04, F03B 13/10, E02B 9/00, E02B 8/08

(54) **ENERGIEERZEUGUNGSEINHEIT**
ENERGY GENERATING UNIT
UNITÉ DE PRODUCTION D'ÉNERGIE

(30) Priorität: 08.12.2011 DE 102011088014
(43) Veröffentlichungstag der Anmeldung: 15.10.2014
(73) Patentinhaber: KSB Aktiengesellschaft, 67227 Frankenthal (DE)
(72) Erfinder: KELLER, Christoph, 67251 Freinsheim (DE); ULRICH, Traugott, 67227 Frankenthal (DE)
(86) Internationale Anmeldenummer: PCT/EP2012/073062
(87) Internationale Veröffentlichungsnummer: WO 2013/083396

(56) Entgegenhaltungen:
- WO-A1-99/27251
- WO-A2-2009/121824
- DE-A1- 19 802 979

## Beschreibung

Die Erfindung betrifft eine Energieerzeugungseinheit zur Erzeugung elektrischer Energie aus Wasserkraft, wobei mindestens eine Turbinenanlage in einem handelsüblichen Norm-Container eingebaut ist, wobei die Turbinenanlage in einem im Norm-Container verlaufenden Kanal angeordnet ist, wobei der Kanal in Strömungsrichtung eines umgebenden Gewässers angeordnet ist.

Vorrichtungen zur Stromerzeugung in gestauten Wasserläufen sind in einer Vielzahl bekannt. Die Einrichtungen stellen jedoch einerseits einen Eingriff in das Ökosystem der Gewässer dar. Insbesondere stellen die Staumauern oder Wehre ein unüberwindbares Hindernis für wandernde Fische dar. Andererseits ist der Bau eines Maschinenhauses zur Instandhaltung der Turbine erforderlich. Dies bedeutet einen weiteren Aufwand und Eingriff in das Ökosystem der Gewässer.

Die WO 99/27251 A1 beschreibt eine Wasserkraftanlage, die als Ganzes, zumindest Turbine und Generator der Wasserkraftanlage, in einen handelsüblichen Norm-Container, wie er für den Schiffs-, Luft-, Strassen- oder Bahntransport verwendet wird, eingebaut ist. Das am weitesten verbreitete Beispiel für einen solchen handelsüblichen Norm Container ist der nach ISO 688 genormte Großraumbehälter, der allgemein als 20 oder 40 Fuß-Container bekannt ist.

Die WO 2009/121 824 zeigt eine Energieerzeugungseinheit, die in einem Norm-Container untergebracht ist, und die die Merkmale des Oberbegriffs des Anspruchs 1 offenbart. Die Verwendung eines solchen Containers ermöglicht die einfache und schnelle Bereitstellung von elektrischer Energie in einem relativ kleinen Flusslauf. Sofern eine Zufahrtmöglichkeit besteht, kann der Container quasi anschlussfertig abgesetzt werden. Allerdings lässt die Methode der Energiegewinnung die Frage nach ökologisch notwendigen und oftmals gesetzlich geforderten Räumen für die freie Fischwanderung unberücksichtigt. Eine entsprechende Fischtreppe wäre unter Umständen separat einzurichten, wodurch die Vorteile einer vollständigen Einheit zur Energiegewinnung stark reduziert werden.

Der vorliegenden Erfindung liegt die Aufgabe zu Grunde, eine Energieerzeugungseinheit zur Stromerzeugung in einem Gewässerlauf zu schaffen, wobei in einem Container eine Ausnehmung vorgesehen ist, in die eine geschlossene strömungsführende Einrichtung eingebracht ist, in der eine Turbine vorgesehen ist, und wobei in dem Norm-Container ein Fischweg vorgesehen ist. Die erfindungsgemäße Energieerzeugungseinheit entspricht ökologischen und gesetzlichen Anforderungen und ist vollständig vormontierbar, so dass sie am Einsatzort aufgestellt und ohne weitere Maßnahmen in Betrieb genommen werden kann. Ein weiterer Vorteil ist dabei, dass der bauliche Aufwand bei der Einrichtung der Energieerzeugungseinheit gering gehalten werden kann. Insbesondere sind keine landschaftsschädigenden Bauwerke, wie beispielsweise ein Maschinenhaus oder ein separater Fischweg notwendig.

Ebenfalls ist bei der Erfindung vorgesehen, dass bei der Energieerzeugungseinheit in Strömungsrichtung des umgebenden Gewässers mindestens ein Kanal angeordnet ist, in dem keine Turbine vorgesehen ist. Dies ermöglicht die Bereitstellung eines Fischweges innerhalb des Norm-Containers. Zur Verringerung der Strömungsgeschwindigkeit in diesem Kanal ist es möglich, Barrieren vorzusehen. Bei geeigneter Anordnung schaffen diese Barrieren Bereiche mit hoher Strömung sowie Bereiche mit nahezu ruhendem Wasser. Ist der Fließweg des Wassers entlang des Fischweges mäandrierend ausgeformt, so ergibt sich der Vorteil, dass die Strömung im Fischweg gebremst und der Durchfluss verringert wird.

Alternativ besteht die Möglichkeit einer Ausgestaltung der Energieerzeugungseinheit bei der an mindestens einer Außenseite des Norm-Containers ein Fischweg vorgesehen ist, insbesondere in Strömungsrichtung des umgebenden Gewässers. Dies ermöglicht einerseits, den Querschnitt des aufstauenden Norm-Containers maximal zu nutzen, andererseits besteht durch die außen liegende Anordnung des Fischwegs die Möglichkeit, lokale Gegebenheiten des Fliessgewässers einzubeziehen. Ein vorhandener flacher Uferbereich kann beispielsweise ideale Voraussetzungen für einen Fischweg bieten, wobei der Fischweg durch Barrieren zur Verzögerung der Strömung erzeugt wird.

Die Barrieren sind in einer weiteren Ausgestaltung durch flexible Teilkörper herstellbar, insbesondere durch aufblasbare und / oder wasserbefüllbare Teilkörper. Beispielsweise lassen sich lokale Gegebenheiten durch aufblasbare Teilkörper aus elastischem Material, das sich an die Kontur des Gewässerbettes anschmiegt, nachempfinden. Um einen Auftrieb der Teilkörper zu verhindern, sind diese zu beschweren, wobei sich hier eine zumindest teilweise Füllung mit Wasser anbietet.

Zum weiteren Schutz der Fische ist bei einer weiteren Ausgestaltung im Anströmbereich der Turbinenanlage eine Ablenkvorrichtung für Fische vorgesehen. Für kleine Fische besteht keine Gefahr, wenn sie die Turbine der Energieerzeugungseinheit passieren, da sie aufgrund ihrer Größe nicht von den Schaufeln erfasst werden. Größere Fische können beispielsweise mittels eines Gitters vom Zugang zur Turbine ferngehalten werden. Bei entsprechender Anordnung des Gitters werden die größeren Fische sogar direkt zum Fischweg geleitet.

In einer weiteren Ausgestaltung ist vorgesehen, dass an den Außenseiten des Norm-Containers aufblasbare und / oder wasserbefüllbare Körper vorgesehen sind, die eine grundlegende Abdichtung innerhalb des Gewässerbetts ermöglichen. Somit lässt sich die aufstauende Wirkung erhöhen und bei Bedarf auch regeln. Bedarfsweise ist es nicht sinnvoll, ein Fliessgewässer vollständig aufzustauen, um beispielsweise Überschwemmungen im Oberlauf zu vermeiden. Durch die flexiblen Körper ist eine passgenaue Aufstauung ermöglicht.

Die Turbinenanlage kann in einer weiteren Ausgestaltung mit einem geschlossenen und durchströmten Diffusor versehen sein, der den Wirkungsgrad der Anlage zusätzlich erhöht. Durch die Anwendung eines herkömmlichen Pumpenlaufrades als Turbinenrad besteht die Möglichkeit flexibel auf die Anforderungen an den jeweiligen Einsatzort einzugehen.

In einer weiteren vorteilhaften Ausgestaltung ist der unterstromseitige Zugang zum Fischweg quer zur Flussrichtung angeordnet. Von Vorteil ist dabei, dass der Zugang in einem Bereich liegt, in dem die Strömung ruhig ist. In direkter Nähe zu diesem Zugang befindet sich der Auslass des Diffusors, an dem eine vergleichsweise hohe Strömung vorliegt.

Anhand von Ausführungsbeispielen wird die Erfindung näher erläutert. Die Zeichnungen zeigen eine erfindungsgemäße Energieerzeugungseinheit. Im Einzelnen zeigt die
- Fig. 1: eine Energieversorgungseinheit, in Ansichten von oben, in Fliessrichtung des Gewässers und von der Seite, die
- Fig. 2: eine Variante einer nicht zur Erfindung gehörenden Energieversorgungseinheit und die
- Fig. 3: eine erfindungsgemäße Energieerzeugungseinheit.

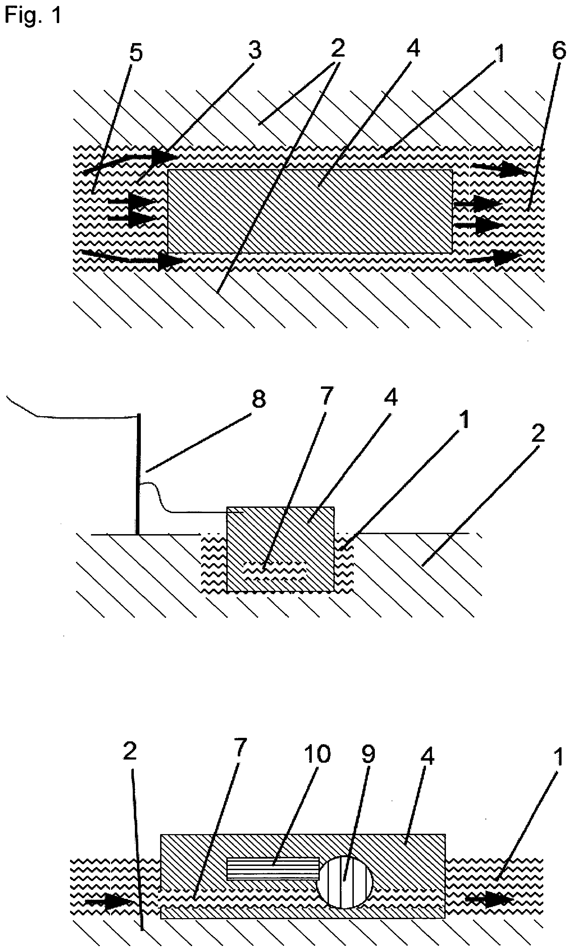

In der Fig. 1 ist ein Gewässer 1, insbesondere ein Fließgewässer, dargestellt, wobei es vorteilhaft ist, wenn die Ufer und der Grund 2 des Gewässers 1 möglichst gerade verlaufen. Die Fließrichtung 3 ist durch Pfeile dargestellt. Bei ausreichender Strömung ist es sinnvoll, eine Energieerzeugungseinheit in das Gewässer 1 einzubringen, die wie in der Fig. 1 dargestellt in einem Norm-Container 4 untergebracht ist. Dieser Norm-Container 4 staut das Gewässer 1 auf, so dass es zu einem Pegelunterschied zwischen der Anströmseite 5 und der Abströmseite 6 kommt. Dieser Unterschied wird ausgeglichen indem das Wasser seitlich am Norm-Container vorbeiströmt, oder wie es in der Mitte der Fig. 1 dargestellt ist durch einen im Norm-Container 1 vorgesehenen Kanal 7. Im Unteren Teil der Fig. 1 ist ein Schnitt durch den Norm-Container 1 dargestellt, wobei schematisch eine Turbine 9 und ein Schaltschrank 10 gezeigt sind, wobei der Schaltschrank 10 für sämtliche Komponenten steht, die zur Umwandlung der mechanischen Bewegungsenergie der Turbine in elektrische Energie notwendig sind. Die erzeugte elektrische Energie wird durch eine Leitung 8 zu einem Verbraucher geleitet oder in ein vorhandenes Netz eingespeist. Die dargestellte Anordnung entspricht im Wesentlichen dem bereits bekannten Stand der Technik.

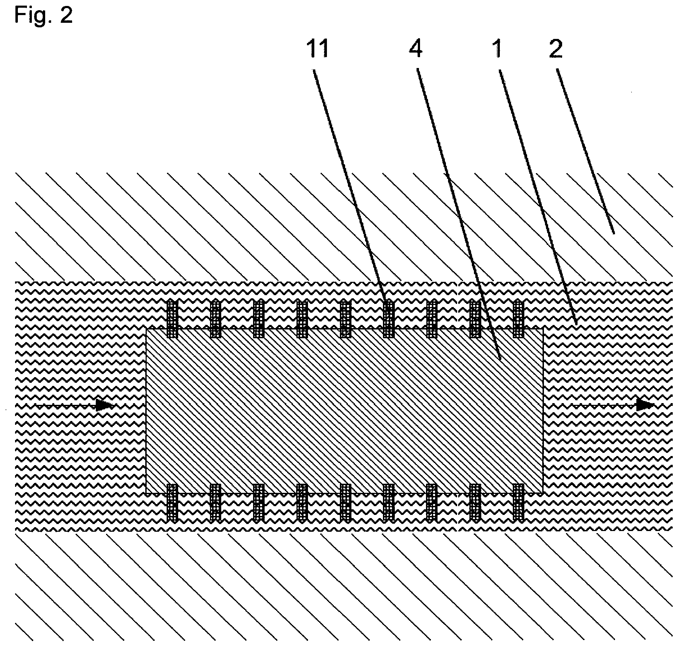

Eine Variante einer nicht zur Erfindung gehörenden Energieerzeugungseinheit ist in der Fig. 2 dargestellt. Im Gewässer 1 ist der Norm-Container 4 angeordnet. Der Norm-Container 4 ist in seinem Innern so ausgestattet wie das in Fig. 1 dargestellte Beispiel. Der Norm-Container 4 teilt den Gewässerfluss in einen Anteil, der durch den Kanal 7 durch das Innere des Norm-Containers 4 strömt und dort seine Energie an die Turbine abgibt und einen Anteil, der seitlich und unterhalb des Norm-Containers 4 vorbei fließt. Der Norm-Container 4 verfügt an den Seiten, die dem Ufer und dem Gewässergrund 2 zugewandt sind über Flussbarrieren 11, die die Gewässerströmung im Randbereich reduzieren. Der Gewässerfluss um den Norm-Container 4 wird gebremst, jedoch nicht vollständig unterbunden. In diesem Teilfluss des Gewässers haben Fische und andere Wassertiere die Möglichkeit die Energieerzeugungseinheit unbeschadet zu passieren. In der Fig. 2 nicht dargestellt sind weitere Flussbarrieren, die von der Uferseite aus so angebracht sind, dass ein mäandrierender Gewässerfluss entsteht.

In der dargestellten Form ist die Energieerzeugungseinheit sehr flexibel in das Gewässerbett einzubringen. Sie kann quasi ohne weiteren Aufwand direkt zur Erzeugung elektrischer Energie genutzt werden. Wird die Energieerzeugungseinheit aus dem Gewässerbett entfernt, so sind außer dem Norm-Container keine weiteren Bauwerke zu entfernen.

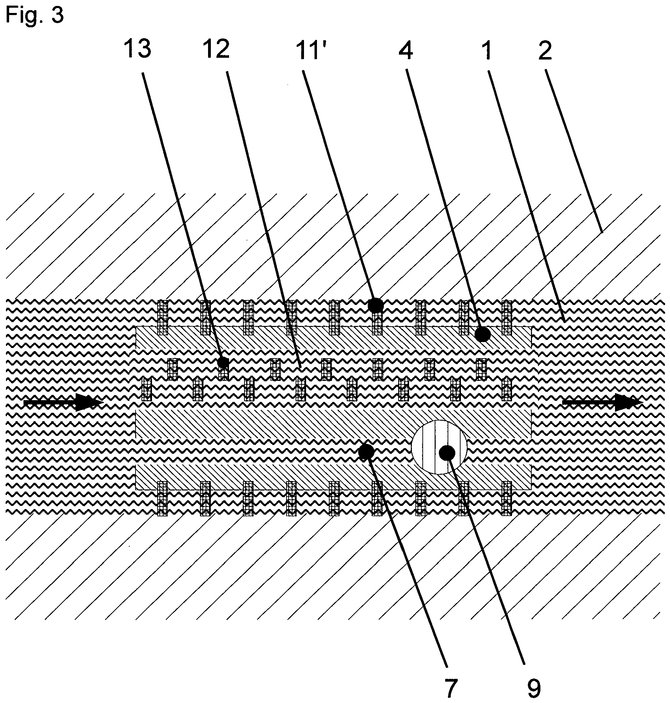

Die Fig. 3 zeigt eine erfindungsgemäße Energieerzeugungseinheit in einer Draufsicht. Im Schnittbild des Norm-Containers 4 ist die Anordnung aus Kanal 7 und Turbine 9 zu erkennen. Zusätzlich ist ein weiterer Kanal 12 dargestellt, der als Fischweg ausgelegt ist. Die Strömung durch diesen weiteren Kanal 12 wird durch Flussbarrieren 13 gebremst. An seinen Außenseiten verfügt der Norm-Container 4 über Flussbarrieren 11', die den Bereich zwischen Norm-Container 4 und dem Ufer 2 abdichten. Durch diese Abdichtung ist es möglich, die Stauwirkung der Energieerzeugungseinheit entsprechend der Anforderungen an die Energieerzeugung und den lokalen Randbedingungen des Gewässerlaufs anzupassen. Die Flussbarrieren 11' sind zur optimalen Anpassung an die Geometrie des Uferbereichs und des Gewässergrunds aus einem elastischen Material gefertigt, das ballonartig aufgepumpt werden kann, wobei sich zur Befüllung das umliegende Wasser eignet. Die Lage und der Befüllvorgang der Flussbarrieren 11' ist so zu gestalten, dass das lokale Ökosystem minimal beeinträchtigt wird, insbesondere wird beispielsweise durch ein Absperrgitter im Bereich der Flussbarrieren 11' verhindert, dass beim Befüllen einzelne Fische zwischen zwei Flussbarrieren 11' eingeschlossen werden.

### Bezugszeichenliste

- 1.: Gewässer
- 2.: Ufer / Grund
- 3.: Fließrichtung
- 4.: Container
- 5.: Anströmseite
- 6.: Abströmseite
- 7.: Kanal
- 8.: Elektrizitätsnetz
- 9.: Turbine
- 10.: Schaltschrank
- 11.: Flussbarriere
- 12.: Fischtreppe
- 13.: Flussbarriere

## Patentansprüche

1. Energieerzeugungseinheit zur Erzeugung elektrischer Energie aus Wasserkraft, wobei mindestens eine Turbinenanlage in einem handelsüblichen Norm-Container (4) eingebaut ist, wobei die Turbinenanlage in einem im Norm-Container verlaufenden Kanal (7) angeordnet ist, wobei der Kanal (7) in Strömungsrichtung eines umgebenden Gewässers angeordnet ist, **dadurch gekennzeichnet, dass** in Strömungsrichtung des umgebenden Gewässers (1) ist zusätzlich mindestens ein weiterer Kanal (12) angeordnet, in dem keine Turbine (9) vorgesehen ist, der innerhalb des Norm-Containers (4) vorgesehen ist, und der als Fischweg ausgelegt ist.

2. Energieerzeugungseinheit nach Anspruch 1, **dadurch gekennzeichnet, dass** in dem weiteren Kanal (12) Barrieren (11, 13) zur Verzögerung der Strömung vorgesehen sind.

3. Energieerzeugungseinheit nach Anspruch 1, **dadurch gekennzeichnet, dass** an mindestens einer Außenseite des Norm-Containers (4) noch ein zusätzlichen Fischweg vorgesehen ist, insbesondere in Strömungsrichtung des umgebenden Gewässers (1).

4. Energieerzeugungseinheit nach Anspruch 3, **dadurch gekennzeichnet, dass** der Fischweg durch Barrieren (11, 13) zur Verzögerung der Strömung erzeugt wird.

5. Energieerzeugungseinheit nach Anspruch 3 oder 4, **dadurch gekennzeichnet, dass** die Barrieren (11, 13) durch flexible Teilkörper herstellbar sind, insbesondere durch aufblasbare und / oder wasserbefüllbare Teilkörper.

6. Energieerzeugungseinheit nach einem der Ansprüche 1 bis 5, **dadurch gekennzeichnet, dass** im Anströmbereich der Turbinenanlage eine Ablenkvorrichtung für Fische vorgesehen ist.

7. Energieerzeugungseinheit nach einem der vorgenannten Ansprüche, **dadurch gekennzeichnet, dass** die Turbinenanlage mit einem geschlossenen und durchströmten Diffusor versehen ist.

8. Energieerzeugungseinheit nach einem der vorgenannten Ansprüche, **dadurch gekennzeichnet, dass** ein herkömmliches Kreiselpumpenlaufrad als Turbinenrad vorgesehen ist.

## Claims

1. Energy generating unit for generating electrical energy from water power, wherein at least one turbine system is installed in a commercially available standard shipping container (4), wherein the turbine system is arranged in a channel(7) extending inside the standard shipping container, wherein the channel (7) is arranged in the direction of flow of a surrounding body of water, **characterized in that** additionally at least one further channel (12), in which no turbine (9) is provided, is arranged in the direction of flow of the surrounding body of water (1), which channel is provided inside the standard shipping container (4) and which is designed as a fishway.

2. Energy generating unit according to Claim 1, **characterized in that** barriers (11, 13) for slowing down the flow are provided in the further channel (12).

3. Energy generating unit according to Claim 1, **characterized in that** an additional fishway is provided on at least one external side of the standard shipping container (4), in particular in the direction of flow of the surrounding body of water (1).

4. Energy generating unit according to Claim 3, **characterized in that** the fishway is created by barriers (11, 13) for slowing down the flow.

5. Energy generating unit according to Claim 3 or 4, **characterized in that** the barriers (11, 13) can be produced by flexible part bodies, in particular by inflatable and/or water-fillable part bodies.

6. Energy generating unit according to one of Claims 1 to 5, **characterized in that** a diverting device for fish is provided in the upstream area of the turbine system.

7. Energy generating unit according to one of the preceding claims, **characterized in that** the turbine system is provided with a closed diffuser through which the water flows.

8. Energy generating unit according to one of the preceding claims, **characterized in that** a conventional centrifugal pump impeller is provided as a turbine wheel.

## Revendications

1. Unité de génération d'énergie destinée à générer de l'énergie électrique à partir de l'énergie hydraulique, au moins un équipement à turbine étant intégré dans un conteneur normalisé (4) d'usage courant, l'équipement à turbine étant disposé dans un conduit (7) qui s'étend dans le conteneur normalisé, le conduit (7) étant disposé dans le sens de l'écoulement d'un milieu aquatique environnant,
**caractérisée en ce que**
au moins un conduit supplémentaire (12) est disposé dans le sens de l'écoulement d'un milieu aquatique (1) environnant, dans lequel ne se trouve aucune turbine (9), lequel se trouve à l'intérieur du conteneur normalisé (4) et lequel est conçu comme une passe à poissons.

2. Unité de génération d'énergie selon la revendication 1, **caractérisée en ce que** des barrières (11, 13) destinées à ralentir l'écoulement se trouvent dans le conduit supplémentaire (12).

3. Unité de génération d'énergie selon la revendication 1, **caractérisée en ce qu'**une passe à poissons supplémentaire se trouve encore sur au moins un côté extérieur du conteneur normalisé (4), notamment dans le sens de l'écoulement du milieu aquatique (1) environnant.

4. Unité de génération d'énergie selon la revendication 3, **caractérisée en ce que** la passe à poissons est produite par des barrières (11, 13) destinées à ralentir l'écoulement.

5. Unité de génération d'énergie selon la revendication 3 ou 4, **caractérisée en ce que** les barrières (11, 13) peuvent être fabriquées par des corps partiels flexibles, notamment par des corps partiels gonflables et/ou pouvant être remplis avec de l'eau.

6. Unité de génération d'énergie selon l'une des revendications 1 à 5, **caractérisée en ce qu'**un dispositif de déviation pour les poissons se trouve dans la zone d'afflux de l'équipement à turbine.

7. Unité de génération d'énergie selon l'une des revendications précédentes, **caractérisée en ce que** l'équipement à turbine est pourvu d'un diffuseur fermé et traversé par le courant.

8. Unité de génération d'énergie selon l'une des revendications précédentes, **caractérisée en ce qu'**une roue à aubes de pompe centrifuge courante est prévue en tant que roue de turbine.
